(19) Europäisches Patentamt / European Patent Office / Office européen des brevets

(11) **EP 1 971 985 B1**

(12) **EUROPEAN PATENT SPECIFICATION**

(45) Date of publication and mention
of the grant of the patent:
**26.09.2018 Bulletin 2018/39**

(21) Application number: **06851215.1**

(22) Date of filing: **28.12.2006**

(51) Int Cl.:
***G21B 3/00*** *(2006.01)*

(86) International application number:
**PCT/US2006/062683**

(87) International publication number:
**WO 2007/130156 (15.11.2007 Gazette 2007/46)**

(54) **ENERGY GENERATION APPARATUS AND METHOD**

ENERGIEERZEUGUNGSVORRICHTUNG UND VERFARHEN

DISPOSITIF ET PROCÉDÉ DE GÉNÉRATION D'ÉNERGIE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **29.12.2005 US 755024 P**

(43) Date of publication of application:
**24.09.2008 Bulletin 2008/39**

(73) Proprietor: **Brillouin Energy Corp.
CA 94705 (US)**

(72) Inventor: **GODES, Robert, E.
Berkeley, California 94705 (US)**

(74) Representative: **Gill Jennings & Every LLP
The Broadgate Tower
20 Primrose Street
London EC2A 2ES (GB)**

(56) References cited:
**EP-A1- 0 645 777     EP-A1- 1 551 032
WO-A2-90/13129     WO-A2-96/42085
WO-A2-03/066516     WO-A2-2004/044923
FR-A1- 2 708 779     US-A- 4 871 813
US-A- 5 160 695     US-B1- 6 248 221**

**Description**

CROSS REFERENCE TO RELATED APPLICATIONS

This application claims priority from U.S. Provisional Patent Application No. 60/755,024, filed December 29, 2005 for "Energy Generation Apparatus and Method" (Robert E. Godes).

BACKGROUND OF THE INVENTION

The present invention relates generally to energy generation, and more specifically to energy generation using nuclear fusion.

While there is no shortage of people desiring to produce energy through controlled fusion, the techniques can be considered to fall into two general classes, namely hot fusion and cold fusion. Hot fusion has a sound theory, and is known to work in a fashion capable of unleashing great amounts of energy in a very short amount of time. In some instances, the energy is released in an uncontrolled manner, rendering the collection of released energy problematical and expensive, possibly prohibitively so. One set of techniques for getting the hot fusion reaction to occur at a controlled pace uses electrostatic confinement. However, extracting more energy than is used to instigate the reaction is extremely difficult, if not impossible, due to the Bremsstrahlung phenomenon. Another set of techniques uses magnetic confinement, although confinement for an extended period of time has problems similar to those that beset electrostatic confinement. Another set of techniques explores impact fusion, but these attempts suffer from problems similar to those bedeviling the other hot fusion methods.

The history of cold fusion is, to say the least, checkered. A workable theory of cold fusion does not appear to have been articulated, and attempts to produce energy using cold fusion have generally not been reproducible and, when excess energy has been generated, have been characterized by rapid destruction of the device cores in which the reactions are occurring.

As understood, current state of the art attempts to produce "cold fusion" rely upon an effect *best* described as "gross loading." Gross loading is the process whereby the matrix is saturated with hydrogen nuclei to the point where, per the theory presented in this application, a small amount of phonon energy initiates a nuclear reaction. Unfortunately, the first reaction creates additional phonons that cause a chain reaction that leads to the destruction of the lattice. This approach can create excess energy because the high loading density alone leads to a system with high Hamiltonian energy in the lattice. This higher energy state leads to phonon-moderated nuclear reactions if the loaded matrix is stimulated with additional energy inputs, including additional loading through electrolysis or other stimuli referenced in the Cravens and Letts paper.

[Cravens2003], and the associated research, demonstrate that state of the art researchers have still not recognized the connection between increased lattice energy and heat production. [George1997] describes using ultrasonically induced multi-bubble sonoluminescence to induce fusion events, although because of the gross loading the core is quickly destroyed. In this case the sonoluminescence is both the source of hydrogen production and phonon energy, but there is no mention of any attempt to control phonon production or harness phonons to capture the energy released. [George1999] describes a device that heats a cylinder to 400°F, (204.4°C), but no control mechanism is mentioned or described. [George1999] also describes excess $^4$He production from deuterium during contact with nano-particle palladium on carbon at 200° C.

EP 0 645 777 A1, FR 2 708 779 A1, WO 03/066516 A2, WO 90/13129 A2, EP 1 551 032 A1, and WO 2004/044923 A2 describe background art.

SUMMARY OF THE INVENTION

Embodiments of the present invention provide a practical, controllable, source of fusion energy based on the mechanisms outlined below. This source is scalable from the Micro Electronic Mechanical System (MEMS) scale at the milliwatt / watt level to the 100- kilowatt level and beyond in a single core device. In short, embodiments of the invention contemplate inducing and controlling phonon-moderated nuclear reactions.

Another aspect of the present disclosure provides the understanding required to design and build products based on the core technology, referred to as Quantum Fusion.

All the described implementations of this technology embodying Quantum Fusion include the following four elements.

- a reaction matrix (core);
- a mechanism for inducing phonons in the core;
- a mechanism for introducing (loading) reactants into the core; and

- a mechanism for controlling the loading of reactants and the generation of phonons so that reactants, when introduced into said core, undergo nuclear reactions to a desired degree without destroying the core.

The control system maintains the rate of phonon generation and reactant introduction at a sufficiently high level to cause a desired number of nuclear reactions to occur while ensuring that the number of nuclear reactions and their depth is limited, thereby allowing energy released due to the nuclear reactions to dissipate in a manner that substantially avoids destruction of said core.

Associated with embodiments is a heat transfer mechanism, which may be inherent in one or more of the above elements, may be a separate element, or may have attributes of both.

In broad terms, embodiments of the invention are believed to operate as follows. Reactants (e.g., hydrogen ions from water surrounding the core) are introduced into the core (e.g., palladium), and phonons are induced in a controlled manner to provide sufficient energy to convert protons into neutrons via an electron capture mechanism. The phonon-mediated mechanism is sometimes referred to in this application as quantum compression, which is a coined term (to be discussed in detail below). The neutrons, so generated, are of sufficiently low energy to result in high cross sections for neutron-hydrogen reactions.

This generates increasingly high-atomic-weight isotopes of hydrogen, resulting in $^4$H, which beta decays to $^4$He. It is noted that the data in the National Nuclear Data Center ("NNDC") database is all derived from experiments involving multi-MeV colliders leaving the resulting $^4$H with enough momentum that it is energetically, the path of least resistance to simply eject a neutron. When there is little to no momentum involved, neutron ejection is not a viable decay path as there is no energy to overcome the binding energy no matter how small that energy is. In the NNDC data the neutron is carrying reaction energy away from the system in the form of momentum. The neutron absorptions and the beta decay are exothermic, and result in kinetic energy transfer to the core in the form of phonons, which is dissipated by a suitable heat exchange mechanism (e.g., the water that supplied the reactants).

Another aspect of the present invention is that controlled loading of the core material combined with controlled stimulation of phonon production prevents excess phonon energy build up, which leads to destruction of the core material. This will allow the core to operate for extended lengths of time making it an economically viable source of energy.

Another aspect of the present disclosure is that the core is preferably constructed to provide a consistent phonon density at the desired reaction points in the core material. This allows control over energy liberated with respect to time and the ability of the core material to dissipate energy to the heat transfer medium. In specific embodiments, the phonon density is controlled so that the fusion reaction occurs primarily near the surface of the core, thus preventing the type of catastrophic damage to the core that has characterized many prior art efforts to produce repeatable, sustainable energy generation.

In the present invention, the reaction is initiated using current as the phonon initiator mechanism. In other embodiments of the present invention, acoustic energy such as sonic or ultrasonic energy can be used together with the current as the phonon initiator mechanism.

In one aspect, an apparatus for energy generation according to claim 1 is provided.

In another aspect, a method for energy generation according to claim 12 is provided.

A further understanding of the nature and advantages of the present invention may be realized by reference to the remaining portions of the specification and the drawings.

BRIEF DESCRIPTION OF THE DRAWINGS

FIG. 1 is a high-level schematic diagram showing the elements common to the various embodiments of the invention;

FIG. 2 is a schematic diagram of a first embodiment of the invention including electrolytic loading and quantum compression via current pulses through the core material;

FIGS. 3A-3C are circuit schematic diagrams showing circuitry suitable for various implementations of the first embodiment of the invention;

FIG. 4 is a schematic diagram of a second embodiment of the invention including electrolytic loading and quantum compression via sonic / ultrasonic induction of phonons;

FIG. 5 is a schematic diagram of a third embodiment of the invention including a fluidized bed or powdered style core, direct reactant injection and quantum compression via sonic / ultrasonic induction, which will likely require the use of deuterium fuel as there is no readily available source of electrons for the creation of neutrons;

FIG. 6 is a schematic diagram of a fourth embodiment of the invention including an isolated reactant interacting with a fluidized bed or powdered style core utilizing direct reactant injection, with quantum compression being generated in any one or combination of ways including: 1) sonic / ultrasonic induction, 2) quantum current, 3) thermal (if using method other than quantum current, it will normally be necessary to use a fuel resulting in no net absorption of electrons; however, a method of generation of quantum compression using other than quantum current is not part of the invention);

FIG. 7 shows an implementation where one or more surfaces of the core are in contact with the reactant source and one or more surfaces of the core are in contact with a separate heat sink;

FIG. 8 is a representative timing diagram showing how the loading and quantum pulses can be controlled; and

FIG. 9 is a schematic diagram of an experimental apparatus used to verify experimentally the generation of excess energy in the form of heat.

## DESCRIPTION OF SPECIFIC EMBODIMENTS

### Overview

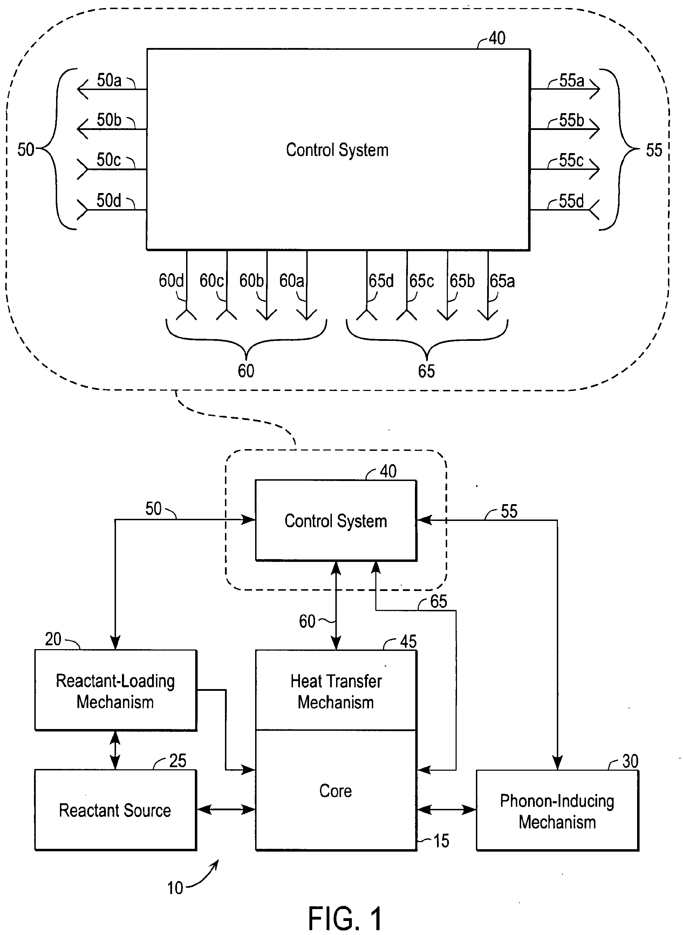

FIG. 1 is a very high level schematic representation of a Quantum Fusion reactor 10 encompassing a number of embodiments of the present invention. At the heart of the reactor is a reaction matrix or core 15 capable of phonon propagation. The general operation is for a reactant-loading mechanism 20 to load core 15 with reactant (e.g., protons) from a reactant source 25, and generate phonons in the core material using a phonon-inducing mechanism 30. A control system 40 activates and monitors reactant-loading mechanism 20 and phonon-inducing mechanism 30.

The phonon-inducing mechanism may stimulate phonons in the core directly using one or more means such as sonic / ultrasonic waves, current, or heat. Phonon energy causes displacement of the core lattice nuclei from their neutral positions. In the case where this displacement moves lattice nuclei closer together the density increases and is further increased by the presence of hydrogen nuclei ($^1$H (protium), $^2$H (deuterium), or $^3$H (tritium)). As the density increases, the Fermi energy of the electrons increases, and so it becomes energetically favorable for an electron and proton to combine to make a neutron and a neutrino. The neutrino escapes from the reactor; however the electron capture results in an overall reduction of system energy by ~782KeV.

The resulting low-energy neutron has a high cross section of reaction with other H, D, or T nuclei. The formation of a deuteron from protium releases ~2.24MeV, the transition of D to T releases ~6.26Mev and the transition to $^4$H with the subsequent $\beta^-$ decay releases ~22.36MeV. Due to the wave nature of phonons and the associated density function driving the electron capture the overall momentum of the resulting $^4$H is low enough that β- is the decay function. Associated with the reactor is a heat transfer mechanism 45, which may be inherent in one or more of the above elements, may be a separate element, or may have attributes of both.

Control system 40 is shown having bi-directional communication with reactant-loading mechanism 20 via a control channel 50 and with phonon-inducing mechanism 30 via a control channel 55, and additional communication paths are shown. While the communication between the control mechanism and the reactant-loading and phonon-inducing mechanisms will usually be associated with electrical connections, the communication paths are intended to be very general. For example, as noted above, the phonon-generation mechanism may use ultrasonic energy or heat.

Control system 40 is also shown as having bi-directional communication with core 15 and heat transfer mechanism 45 via control channels 60 and 65. These additional control channels would allow an additional ability to control the reaction, but or both may be unnecessary in some embodiments. In some embodiments, these control channels provide signals from pressure and temperature sensors.

Control system 40 is shown as an enlarged detail with specific connections. More specifically, from the point of view of control system 40, control channel 50 is shown as having control outputs 50a and 50b, and a control inputs 50c,50d. Similarly, control channel 55 is shown as having control outputs 55a, 55b, and 55c, and a control input 55d; control channel 60 is shown as having a control outputs 60a and 60b, and control outputs 60c and 60d; and control channel 65 is shown as having control inputs 65a and 65b, and control outputs 65c and 65d.

The same reference numbers will be used in the different embodiments, with the understanding that what are seen as control inputs and outputs from the point of view of control system 40 will be seen as control outputs and inputs from the point of view of reactant-loading mechanism 20, phonon-inducing mechanism 30, heat transfer mechanism, and core 15. Different embodiments may have different combinations of control inputs and outputs.

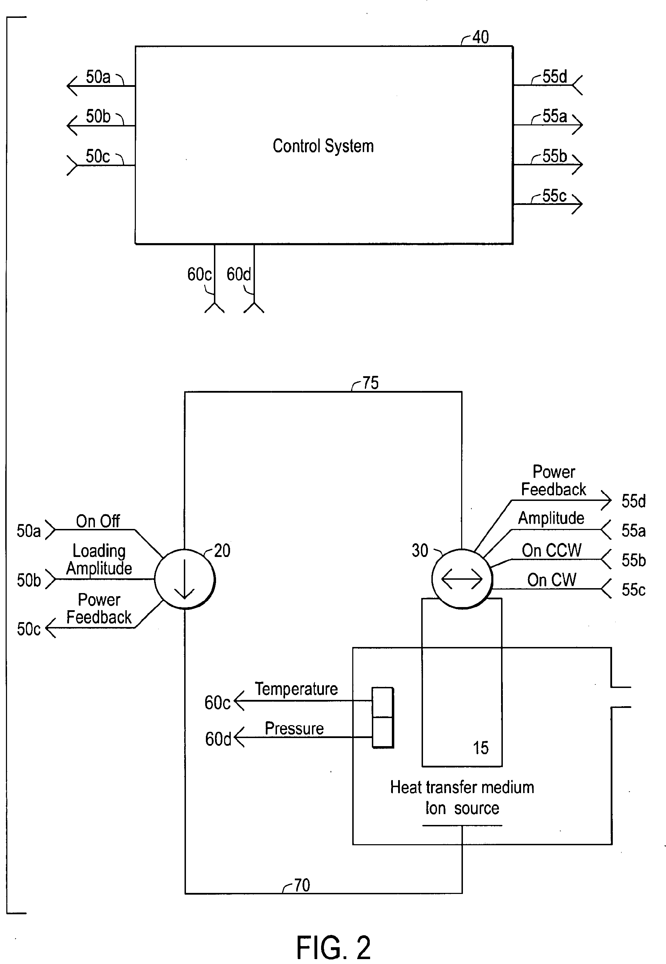

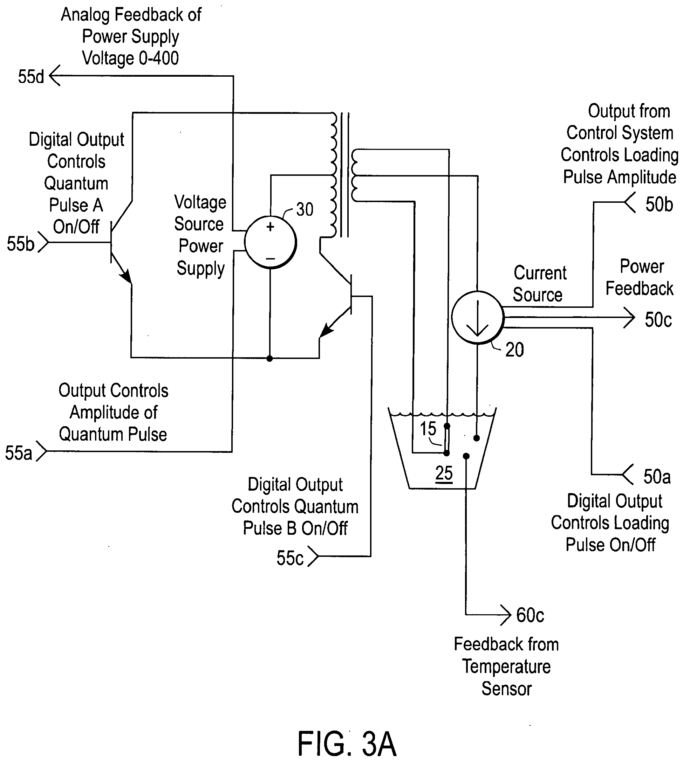

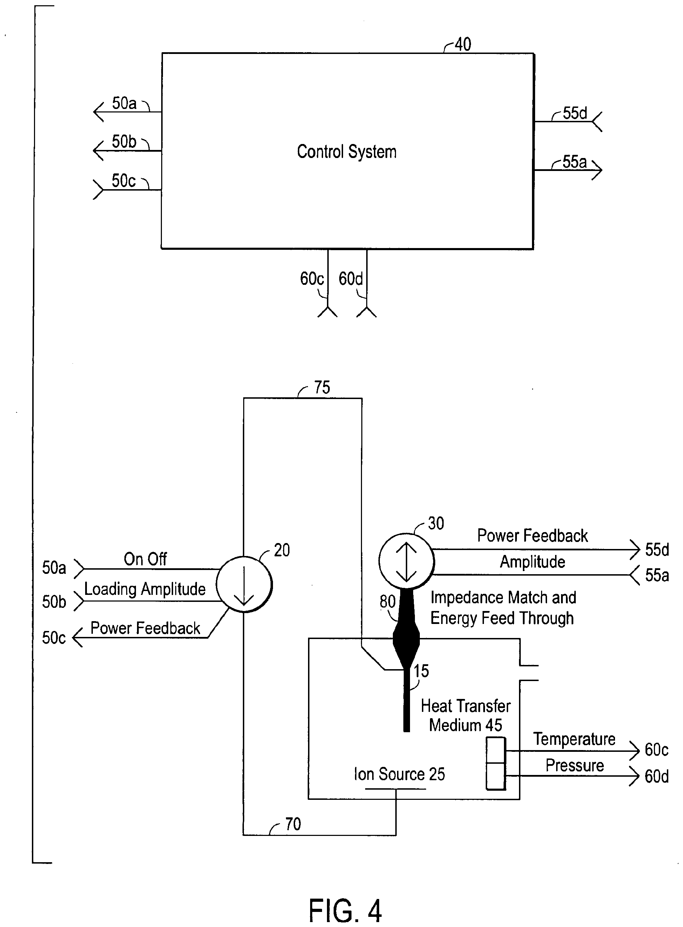

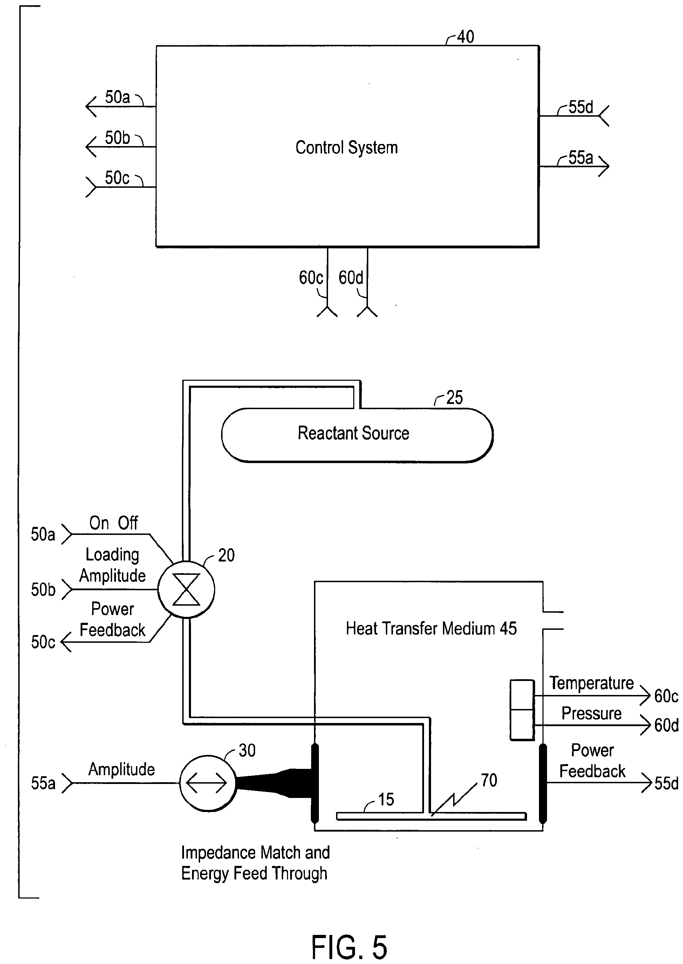

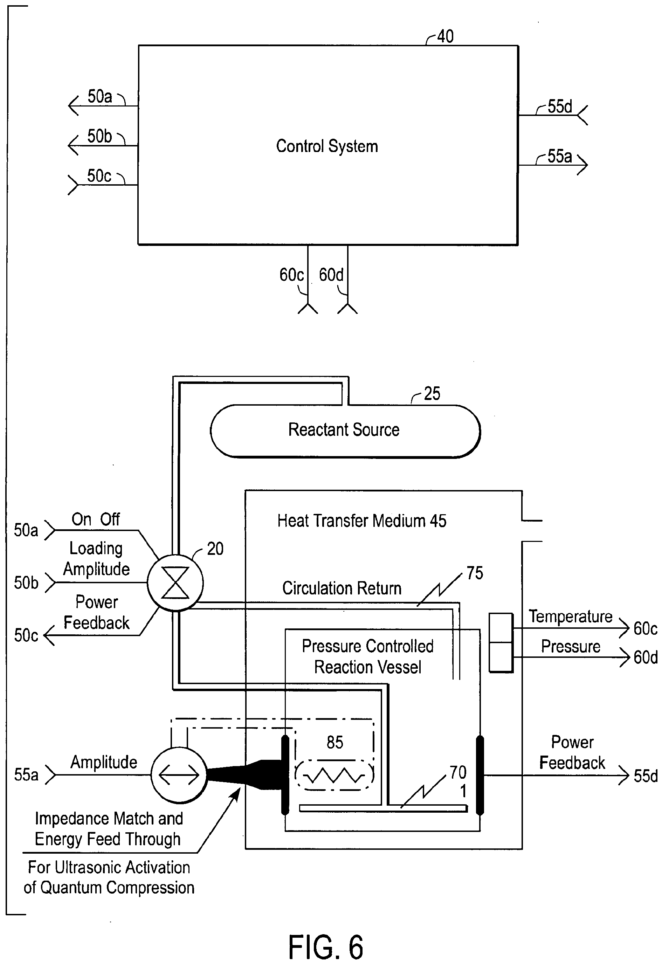

Four specific embodiments of a Quantum Fusion reactor are described in detail below. A first embodiment (FIGS. 2 and FIGS. 3A-3C) uses an electrical field to control loading of the core material and current pulses as part of the phonon-generation mechanism. A second embodiment (FIG. 4) uses an electrical field to control loading of the core material and sonic or ultrasonic energy as part of the phonon-generation mechanism. A third embodiment (FIG. 5) uses a fluidized bed of core material. Reactant is pumped directly into the reaction chamber to control core loading. The fluidized bed is capable of phonon propagation. Phonon generation in the fluidized bed may be stimulated by directly imparting sonic / ultrasonic energy, current, or a combination of both. A fourth embodiment (FIG. 6) is a sealed container device in which the combination of reactant gas pressure and the temperature of the core material control the loading rate. The elements have been numbered such that elements having equivalent or analogous function from embodiment to embodiment have the same identifying reference number.

Common Features of the Preferred Quantum Fusion Embodiments

The following table sets forth the basic elements of the embodiments, the first four of which were briefly outlined above.

| | |
|---|---|
| 15 | Core 15 comprises a lattice type material (magnesium, chromium, iron, cobalt, nickel, molybdenum, palladium, silver, tungsten some ceramics, etc.) capable of propagating phonons, loading reactants, and supplying valence or conduction band electrons. FIGS. 5 and 6 show a fluidic or powder bed implementation of the core where the reactants are readily absorbed by the liquid or powder core material. FIG. 6 shows a version where the reactants and core material are isolated from the heat transfer medium. |
| 30 | Phonon-inducing mechanism 30 has as its primary function transferring energy to the core in the form of phonons. A second function, for cases where the loading is induced by means of an electric field, is allowing the entire core to be given a negative charge with respect to the anode. This provides for uniform loading of the core. In FIG. 6 the Quantum compression may be induced in three separate ways; 1) sonic / ultrasonic induction, using the impedance match and energy feed through horn, 2) Quantum current, induced using the feed-through horn as one electrode and the dashed line as the other, 3) Thermal, using the heating element connected using the dash dot lines. |
| 25 | The source of the reactant. |
| 45 | Heat transfer medium 45 will in some instances include water. In systems where hydrogen is the reactant material it is possible to use the flux of alpha particles as an electromotive force and as a medium for system heat removal. See U.S. Patent No. 6,753,469. |
| 40 | Control system 40 communicates with reactant-loading mechanism 20 via channel 50, with phonon-inducing mechanism 30 via channel 55, with sensors via channel 60, and with the core via channel 65. |
| 70 | Anode of systems using an electric field for loading of reactants in the form of positive ions. More generically a reactant feed. |
| 75 | Cathode or minus side of the loading current source or other ion delivery system. Should be coupled to the core to allow uniform loading of positive ions into the core. More generically, a reactant return. |
| 50a | Control output 50a provides on/off control for the loading source in electrically loaded systems. In non-electrically loaded systems, this can control the flow of reactants FIG. 4 or extract reactants FIG. 5. |
| 50b | Control output 50b is used to set the level for loading source. In electrically loaded systems, this would set the current level. In other systems, it could control circulation of reactants or speed of reactant injection. |
| 50c | Control input 50c is used to monitor the reactant loading system. With electrically loaded systems it can provide information on the level and state of the reactant / heat transfer medium. On non-electrically loaded systems it can provide pressure, density, or other operating parameters. |
| 20 | Reactant-loading mechanism 20. In devices using electrolytic loading (FIGS. 2, 3A-3C, and 4), this is the current source for loading positive ions into the core. In FIG. 5 it is a pump and or a flow control valve. In this figure the fuel source may simply be turned off to stop the reaction. In FIG. 6 mechanism 20 is used to pressurize the reaction chamber. By loading the reactant in through the bottom inlet buried in the core material it facilitates loading of the reactants. The circulation return line may be used to evacuate the fuel from the reaction chamber for rapid shut down. The circulation return line also allows mechanism 20 to circulate the reactants through the fluidic or powdered core aiding in uniform reaction rates. |
| 55d | Control input 55d is used for monitoring the quantum compression and is used for determination of the fusion efficiency as well as the status of the core. Depending on the core material, temperature and input energy level, the values returned through this sensor(s) will aid in determining the state of the core. |
| 55a | Control output 55a is used as a control input to set the power level of the quantum compression delivered to the core. |
| 55b and 55c | Control outputs 55b and 55c are only applicable to devices using quantum current as the phonon generation source, and determine the direction of the quantum current pulse. Alternating the direction of current maintains uniform loading of the core material. |

FIG. 2 shows schematically an embodiment with electrolytic loading and current pulses for phonon generation.

A pulsed loading current increases reactant density at the surface of the core. Short, quantum current pulses can be used to initiate phonon generation. These quantum current pulses also increase electron density at the core surface, due to and exploiting the skin effect, raising the rate of neutron generation via electron capture at the surface and preventing gross loading which leads to core destruction. In this embodiment, a suitable isolation technology is used to connect both ends of the core material to the phonon generator. The isolation of the quantum current from the loading current allows better control over reactants in the first fusing stage that creates neutrons.

Control system 40 varies and monitors the power associated with both loading current and quantum current. For any given reactor using a quantum current to activate the core, changes in the power level (voltage*current) at any given temperature / current operating point is indicative of changes of the core being monitored. The loading system power (voltage*current) for any given loading current level can also be monitored to provide information on the system status. For reliability purposes the control system designer (during initial development) and the system operator (during routine operation) should run the system to be controlled while varying one parameter at a time to characterize the system. This will build a multi-dimensional control space where different points with in the space will indicate problems such as core degradation, low water level, liquid pH problems and or scaling of the core.

Reactant-loading mechanism 20 in FIG. 2 can be a pulse transformer or other current source of sufficient compliance to create the loading current required to drive electron capture events. The loading current value is dependent on temperature, core cross-section, loading surface area, and compression current. An example of a functional reactor parameter set is quantum current pulse values of 4A for 40 ns at a 100KHz rep rate, with a loading current on the order of 100mA at a water temperature of 65C with a 0.05mm wire core with on the order of 5cm immersed in the water.

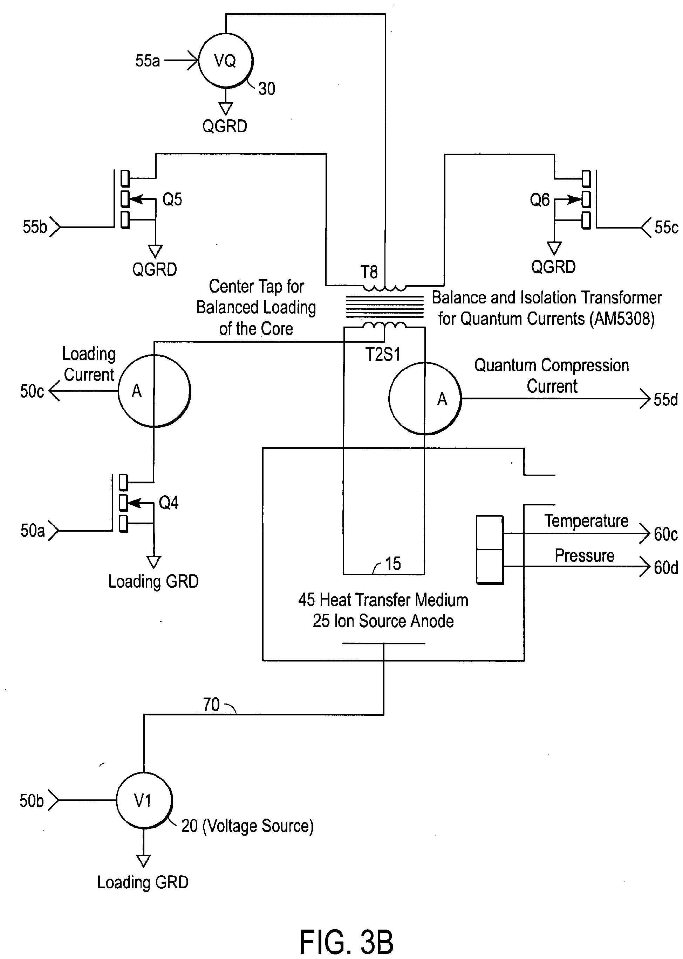

FIGS. 3A and 3B are circuit schematics showing possible implementations of reactant-loading and phonon-generation circuitry.

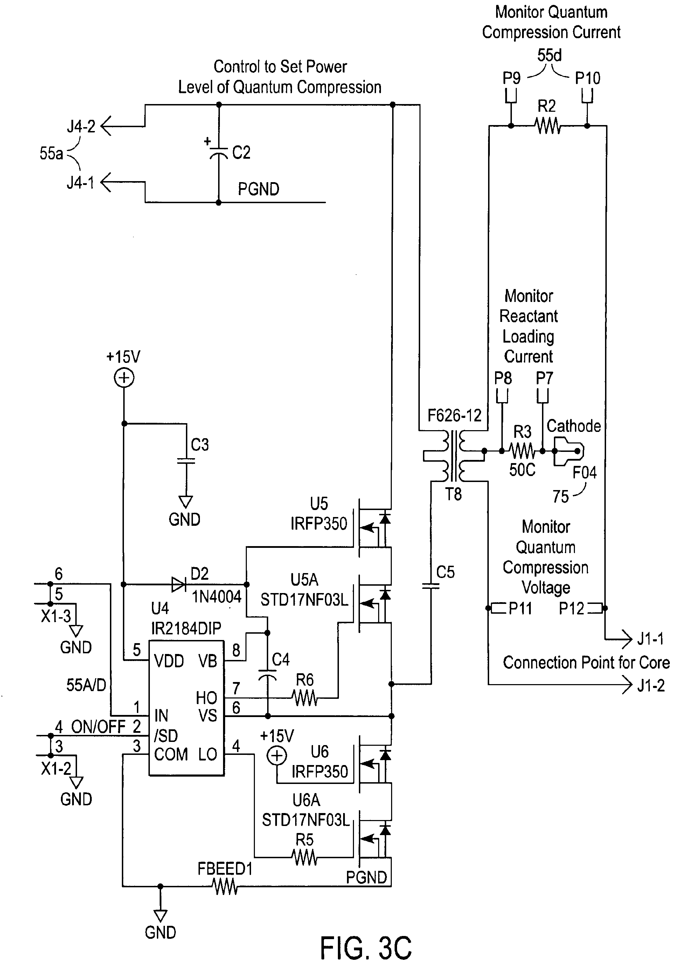

FIG. 3C shows a particular implementation. Core 15 is connected to a connection point J1, which connects the reactor core to the secondary of a transformer T8, which is used to isolate the core from the phonon-inducing mechanism. The center tap on the secondary of transformer T8 is attached to the cathode 75 of the loading current source (F04 is the connection point of the cathode), providing uniform loading of the core material. The device can be made to work with a non-center-tapped connection but this can lead to non-uniform loading leading to uneven heating of the core which could actually be used to benefit in a high axial flow rate parallel to the core system.

Capacitor C5, FETs U5 and U5A, and FETs U6 and U6A provide for symmetrical quantum current pulses in the clockwise and counterclockwise directions, which aid in uniform loading and reaction rates in the core. Outputs from half-bridge driver U4 drive the gates of the FETs. Capacitor C2 is a high voltage, high capacitance low impedance device several orders of magnitude larger than capacitor C5. The voltage on capacitor C2 is provided on control channel 55. FETs U5 and U5A charge capacitor C5. FETs U6 and U6A discharge the charge stored in capacitor C5, providing an opposite polarity quantum current pulse. The FETs are controlled to control the direction of the quantum current pulse, shown as receiving signals over control channels 55b and 55c in FIG. 2. The source-switched configuration provides rapid switching to provide the edge speeds required for driving the quantum current pulses.

This type of driving arrangement gives very fast rise time and short duration quantum current pulses, enhancing the skin effect and concentrates reactions at the surface of the core. This helps to prevent damage from deep and excessive loading of the core material. By adjusting the voltage on capacitor C2 (control channel 55a) it is possible to directly control the power of the quantum current pulses. The required current level of the quantum current pulses varies depending on the temperature, core cross-section, core surface area, loading rate, and power generation needs of the system. The power level can also be used to detect a change in status of the core, indicating core integrity issues.

A a shunt resistor R2 is used for measuring the loading current entering the core. The loading power entering the system can be calculated by multiplying the value of current measured on shunt resistor R2 by the voltage across the loading current source. The loading current power measurement allows feedback of such system conditions as water Ph, pressure, and water level. The water can function as the heat transfer mechanism. The anode of the current loading source is preferably made of a material that will not be attacked by oxygen at the desired operating temperatures. The voltage across shunt resistor R2 provides a measure of the quantum current while the voltage across connection points P11 and P12 provides a measure of the voltage. The product provides a measure of the power of the quantum current compression pulses.

Control of the reactant-loading and quantum compression levels can be similar, for example comprising a capacitor with an electronic switch (FET Q4 in FIG. 3B) controlled by the on/off mechanism.

FIG. 4 is a schematic of an embodiment in which phonon-inducing mechanism 30 is implemented by an ultrasonic to generate the quantum compression phonons. The core of this embodiment may have the same characteristics as the core in the embodiment shown in FIG. 2, and electrolysis is again responsible for loading. A current source is the preferred loading control method. For the reactant source, a liquid is recommended to simultaneously accomplish the heat transfer function. Core 15 is connected to the ultrasonic transmitter using an impedance match device 80 and feed-through to the inside of the reaction vessel. In analogy to the above embodiment shown in FIG. 2, control channel 55a controls the quantum compression power, which is converted to ultrasonic energy by the ultrasonic transmitter. Reactant loading is controlled with a current source, which may be the same loading embodiment shown in FIG. 2.

Control system 40 collects information from the loading source feedback via control channel 50c and phonon generator feedback via control channel 55d, as well as other system inputs, to determine the correct inputs to reactant-loading mechanism 20 and determine the correct quantum compression power to be supplied to phonon-inducing system 30. The former is effected via signals on control channels 50a and 50b; the latter via signals on control channel 55a. These are controlled in order to achieve the desired rate of fusion. Due to the lack of quantum current it may be necessary to at least initiate this type of device with deuterium. The advantage if using deuterium is that there is no net neutron production required and thus no net absorption of electrons.

FIG. 5 is an embodiment wherein core 15 is in the form of a fluidic bed (i.e., a bed of small particles). A possible suitable material would be palladium-plated carbon black, which is commercially available for use as a catalyst, e.g., from Sigma-Aldrich Co., 3050 Spruce Street, St. Louis, MO 63103 or Shanghai July Chemical Co., Ltd., 2999 Zhangyang Road, Pudong, Shanghai City. China 200135. Alternatively, the core could be a porous ceramic. Phonon-inducing mechanism 30 is implemented by an ultrasonic transmitter, which transmits ultrasonic energy into the reaction vessel using an impedance match device and feed-through so as to transfer the energy into the core and set up the phonons required to provide the inter-atomic energy needed to achieve the electron capture phenomenon. The ultrasonic energy is controlled via control channel 55d.

The loading of reactant 25 is dependent on the phase of the reactant. If it is a highpressure gas, reactant-loading mechanism 20 may be a simple metering device for charging the vessel, and the source of signals over control channel 50c may be a pressure gage. In the pressurized vessel embodiment, the reactant feed (70) works with reactant return line (75) to circulate the reactant through the core to stir the helium out of the core and keep fresh reactant in contact with the core material. This embodiment will likely require the use of deuterium fuel as there is no readily available source of electrons for the creation of neutrons. When using deuterium, there is no net consumption of electrons. Rather, the electrons only act as a catalyst.

As in the embodiments shown in FIGS. 2 and 4, control system 40 collects information from the loading source feedback via control channel 50c and phonon generator feedback via control channel 55d, as well as other system inputs, to determine the correct inputs to reactant-loading mechanism 20 and determine the correct quantum compression power to be supplied to phonon-inducing system 30.

FIG. 6 shows an embodiment similar to that shown in FIG. 5, except that the phonon production can be delivered in the form of ultrasonic energy, quantum current, or sufficient thermal energy, shown as an electric heater 85. Ultrasonic and quantum current have the advantage of faster response time and better phonon distribution. As in the embodiment of FIG. 5, the reactant is directly injected into the core material, which may be in the form of a fluidic bed. If no quantum current is provided it may not be possible to implement this type of device without deuterium fuel.

Theory of Operation

The Source of the Observed Energy in so called "Cold Fusion"

Unlike the common assumptions involved in "Cold Fusion," it is believed that the energy released in these reactions is the result of neutron capture by hydrogen isotopes and the beta decay of $^4H$ to $^4He$. The energy released by neutron capture and beta decay is given by the following equations relating the masses of reacting components to products:

| (neutron + $^1H$ - $^2H$) x $c^2$ | = | 02.237 MeV | = | 0.358 pico-joule |
|---|---|---|---|---|
| (neutron + $^2H$ - $^3H$) x $c^2$ | = | 06.259 MeV | = | 1.003 pico-joule |
| (neutron + $^3H$ - ($\beta^-$ + $^4He$)) x $c^2$ | = | 19.577 MeV | = | 3.137 pico-joule |

An additional alternative reaction path is a $^2H$ undergoing an electron capture event and combining with a passing $^2H$ to form $^4He$.

The Source of the Free Neutrons

The neutrons participating in these reactions are the product of flavor change of protons that have been loaded into the core lattice (while the current implementation contemplates a crystalline core, other implementations may use ceramic cores or powder beds). The flavor change represents the transmutation of the proton into a neutron by a process similar to electron capture. Neutron generation requires a crystal lattice capable of generating phonons, capable of loading hydrogen ions, and which can supply valence or conduction band electrons, providing the ~511KeV electron mass. The required system is one that can achieve a total Hamiltonian energy of ~782KeV. This value represents the difference in mass between the proton-electron combination and the mass of the neutron. This combination leads to the transformation of a proton and electron into a neutron. This is an endothermic reaction that leads to an overall lower system energy level. The system is converting only enough energy (mass) to affect an electron capture, leaving the resulting neutron at an extremely low energy level. The resulting low energy neutron has a high cross section of reaction with respect to $^{(1-3)}$H nuclei in the lattice. This neutron capture is similar to the process leading to a neutron star as discussed in [Baym1971], and applies to the H, D and T caught in the lattice and further enhanced by the quantum currents which allows the lower loading in this system.

It is believed that that energy is transferred to the protons through superposition of multiple phonon wave functions within the lattice of the core. This energy grows very rapidly as the non-bonded energy is extremely asymmetric. As mentioned in [NIH_Guide], "Repulsion is modeled by an equation that is designed to rapidly blow up at close distances ($1/r^{12}$ dependency)." Additional energy beyond the phonon energy is realized from atomic band state confinement of ions. When local loading of the lattice is high, hydrogen ions take up positions at the octahedral points of vacant $S_{(n+1)}$ electron orbitals between the $PnS_{(n+1)}$ orbital wave function energy levels in transition metals. This wave function energy level occupation provides confinement necessary for what is referred to as Quantum Compression, a property arising out of the Heisenberg Uncertainty Principle.

Because both the electron and proton are fermions, the ions so trapped experience confinement effects. This confinement energy effect is a function of the Heisenberg Uncertainty Principle as stated in the form $\Delta\rho \geq (h/2\pi)/\Delta x$ and can be enhanced through increased electron density causing occupation of adjacent bands. The conversion of a proton to a neutron is a natural energy reduction mechanism (it requires the addition of ~$1.253\times10^{-13}$ J), converting energy to the mass difference between the proton-electron combination and the mass of a neutron while simultaneously eliminating a positive charge between the compressing nuclei. Because the transmutation is endothermic in nature, the system achieves higher entropy through the transmutation. The transmutation results in low-energy neutrons that have a high cross-section with respect to other hydrogen nuclei, giving an elevated reaction probability.

Energy released in the neutron absorptions interacts with lattice phonons in such a way that it is translated into kinetic energy in the lattice where it is dissipated into the surrounding environment (heat exchange mechanism).

Manner of Operation Based on Theory of Operation

It is the understanding of the reaction at the quantum level that reveals how to obtain the control and reliability required for commercial applications. Below is an outline of the steps involved in the reaction. By understanding the underlying mechanism that initiates a Quantum Fusion reaction it will be possible to use the knowledge contained in this patent to meet most of the world's energy needs today and for the foreseeable future. Phonon-Moderated Nuclear Reactions proceed most efficiently in the following way:

A loading pulse causes dissociation of reactant into ions by electrolysis, and the electrolysis drives free reactants into the core substance. The loading pulse also increases the ion density at the surface of the core. [Davis2001] notes that "An investigation of catalytic dissociation of gas molecules has found that dissociation can follow several paths, e.g., direct reactions and the formation of transient states, as discussed in the article by J. Jellinek entitled "Theoretical Dynamical Studies of Metal Clusters and Cluster-Ligand Systems," (Metal-Ligand Interactions: Structure and Reactivity, N. Russo (ed.), Kluwer Dordrecht, 1995.). Electric fields, which are extremely strong at the surface of the reaction material, serve to attract these dissociated molecules to the material's surface. Advantageously, some of the hydrogen piles up at the material's surface, and then enters the material due to kinetic energy directed along electric field lines."

The core is a material, (magnesium, chromium, iron, cobalt, nickel, molybdenum, palladium, silver, tungsten some ceramics, etc.) capable of propagating phonons, loading reactants, and supplying valence or conduction band electrons. The following are descriptions of possible methods for achieving quantum compression. The quantum compression method allows the Quantum Fusion reaction to be initiated near the surface of the core, avoiding the core destruction inherent with deep loading.

The electrons provide ~511KeV of mass. The required core system is able to achieve a total Hamiltonian energy of ~782KeV at reactant trapping points. This phonon energy, in combination with the electron and its associated momentum, supply the total mass required to convert a proton to a neutron. The resulting neutron is at an extremely low energy level. The low energy level provides an extremely high cross section allowing neutrons to accumulate and eventually leading to beta decay resulting in the formation of $^4$He.

The present disclosure can provide the additional energy required for the transmutation in one of two ways. The first way is by synchronizing an electrical current through the cathode (quantum current) with the electrolysis (loading) pulse. The high current, high frequency-content pulse through the matrix induces the creation of required phonon energy. Second, this energy may also be supplied by inducing phonons using a sonic or ultrasonic transmitter suitably coupled to the core material. Without a source of electrons for neutron capture it is necessary to use deuterium as fuel. The reason deuterium does not require reaction electrons is that after a capture event by a deuteron and subsequent merger with another deuteron, an electron (beta particle) is emitted resulting in no net electron absorption.

It is the inter-atomic energy caused by "phonons" that is the closest description of what is happening known to Applicant at this time. The quantum pulses are far in excess of what the wire is able to handle for any length of time. Standard "phonons" in palladium are ~50meV but that is not going to displace the atoms and cause electro-migration of the atoms. The quantum pulses do appear to cause electro-migration in order to achieve the required compression energy providing 782KeV. I have now run single pulses as high as 35A down the 0.05mm wire and that does not appear to be a typical phonon (50meV phonons are unlikely to add up to provide 768 KeV. With a fast enough edge and short enough width, much lower amplitudes are enough to provide the 782KeV necessary to the 6-atom unit cell where the electron capture takes place.

Protons loaded into the crystal lattice occupy positions in the conduction band of lattice atoms and obey Bloch's Theorem. A Bloch wave or Bloch state is the wave function of a particle placed in a periodic potential (a lattice). It consists of the product of a plane wave and a periodic function $u_{n\mathbf{k}}(\mathbf{r})$ which has the same periodicity as the potential:

$$\psi_{n\mathbf{k}}(\mathbf{r}) = e^{i\mathbf{k}.\mathbf{r}}\, u_{n\mathbf{k}}\,(\mathbf{r})$$

The plane wave vector k multiplied by Planck's constant is the particle's *crystal momentum.* It can be shown that the wave function of a particle in a periodic potential must have this form by proving that translation operators (by lattice vectors) commute with the Hamiltonian. This result is called Bloch's Theorem. The H nuclei in these locations come under extremely high field pressure from the surrounding lattice nuclei. When phonon displacement energy reaches a magnitude of ≈782KeV in the vicinity of an H nucleus it becomes energetically favorable for an electron capture event. The resulting neutron is in a very low energy state with a correspondingly high cross section of interaction with existing H nuclei.

According to quantum field theory, the potential energy of the Hamiltonian can be expressed in terms of fermion and boson creation and annihilation operators such that a set of processes is defined in which a fermion in a given eigenstate either absorbs or emits a boson (phonon), thereby being pushed into a different eigenstate. The change in eigenstate is the change of an Up quark to a down quark, which changes a proton to a neutron.

The hypothesis of the core operation asserts that it is through the creation and absorption of phonons (bosons) that the energy induced as vibrations in the atomic lattice is translated to the nuclear scale, and by which the nuclear energy released by neutron absorption and transmutation is being dispersed as kinetic energy in the lattice. The phonons provide the scale coupling between electromagnetic force-level stimuli in the atomic lattice and the subatomic level increases in momentum.

In systems using hydrogen as the reactant, proton occupation of limited positions within the lattice and augmented by octahedral points between the $P_nS_{(n+1)}D_n$ orbital wave function energy levels in the core transition metal provides additional confinement points. There has been a fair amount of discussion within the cold fusion community of the octahedral points within the lattice being pinning points for the hydrogen ions. One of the key points missing in these discussions is a consideration of the octahedral points between the $P_nS_{(n+1)}D_n$ orbital structures in the transition metals that seem to work. It is in these available orbital wave function energy levels that the hydrogen ion wave functions may be sufficiently confined to undergo the transmutation.

The quantum current pulse initiates the phonons and provides the reacting electrons that lead to neutron production before excessive absorbed hydrogen has had the opportunity to migrate very deeply into the lattice. Deep loading to a high density can lead to the gross loading condition of current cold fusion technology. In this condition the first reaction initiates a chain reaction of all nearby trapped H nuclei. Such a chain reaction liberates so much energy that lattice bonds break, causing disintegration of the core.

The proton drift current induced by the quantum current exerts a motivational force on the reactants within the lattice increasing the potential of nuclear interaction with the newly created low-energy neutrons or neutron rich material.

In systems using hydrogen as the reactant, the binding energy released in the creation of a $^2$H nucleus (deuteron) is ~2.229MeV. Deuterons are neutralized in the same process as single protons and the resulting $^2$N mass interacts with a $^2$H. The transition from $^2$H to $^4$H releases ~3.386MeV. The largest yield of energy comes from the transition of $^4$H via beta decay to $^4$He yielding a total of ~22.965MeV in the form of phonon creation and alpha particle radiation.

Heat Transfer Mechanisms

As shown schematically in FIG. 1, embodiments of the present invention contemplate a heat transfer mechanism (denoted with reference number 45). In some embodiments, where the core is submersed or otherwise in contact with a fluid, which functions as a reactant source, the same fluid can also function as the heat transfer mechanism. In cases where the reactant is H (protium) and the core is from the transition metal group, it is possible to use water with similar treatment as would be applied in traditional boilers. Other cores and reactants will likely work by applying the quantum current / quantum compression technique.

Additional embodiments of useful reactors could include using a thermally but not electrically conductive support with a conductive core. By placing a gas source of reactant on the exposed side of the core and using electrolytic loading, the reaction could be initiated with resistive current heating of the core, with quantum currents, or a combination there of. A significant benefit of having a current flow in the core is the ability to use protium as the primary reactant. The core support would act as the heat sink and transfer the energy to what ever is desired, e.g., direct thermal conversion or a working fluid. The working fluid could be any gas or liquid down to and including the sea of electrons as discussed in [Kolawa2004].

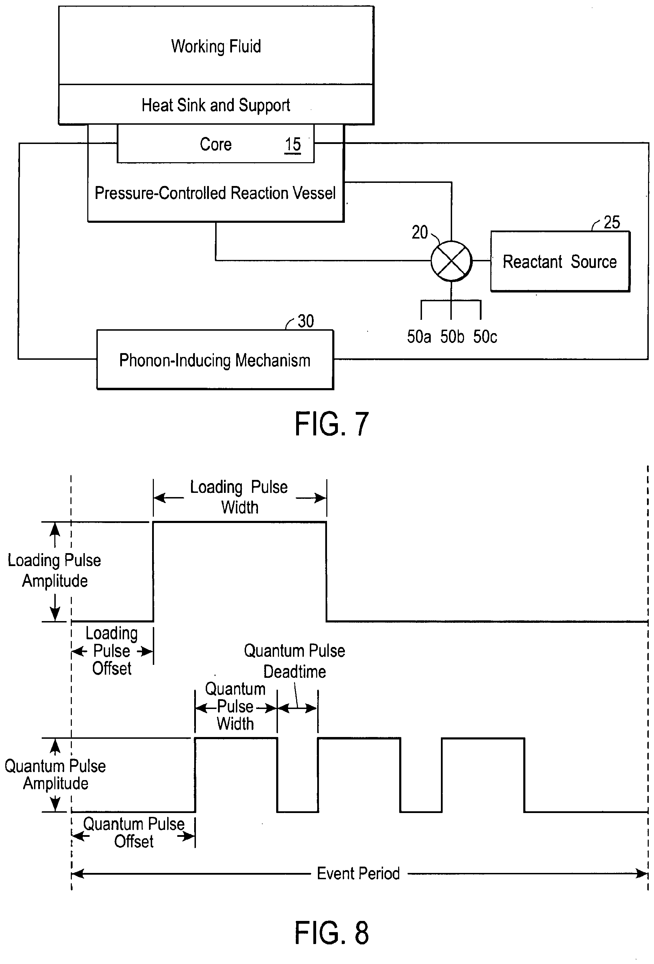

FIG. 7 shows an implementation where one or more surfaces of the core are in contact with the reactant source and one or more surfaces of the core are in contact with a separate heat sink. The heat sink can then transfer heat to a working fluid from which heat could be extracted, either as an end in and of itself, or to run a turbine. The geometry is shown schematically. For example, the core could be a layer of material on the inner surface of a thermally conductive but electrically insulating pipe, with the reactant introduced through the interior of the pipe and the heat withdrawn from the outside surface of the pipe.

Quantum Fusion Reactor Operation and Control

Typical parameters are discussed, with specific quantities being described for a current demonstration reactor. The demonstration reactor is run at atmospheric pressure and uses a solution of sodium hydroxide in order to reduce the loading voltage requirement. A pressurized reactor would most likely eliminate the need for sodium hydroxide. This section frequently discusses a IOnS timing resolution. This is because the current demonstration reactor uses a 100MHz processor in the control system and this represents the available resolution. There is nothing fundamental about the 10ns resolution.

The Quantum Fusion reactor implemented by electrolysis and quantum current control is driven by the stimulation of phonons in a crystal lattice. Phonon stimulation is accomplished by stimulation event cycles consisting of a loading pulse and zero or more quantum current stimulation pulses.

FIG. 8 is a representative timing diagram showing how the loading pulses and quantum current pulses can be controlled. The timing is characterized by a series of event cycles, one of which is shown in the figure.

Event Cycles

An event cycle consists of a loading pulse and zero or more quantum current stimulation pulses. Loading pulses cause dissociation of the water into hydrogen and oxygen and promote the migration of hydrogen nuclei into the reaction matrix. Quantum current pulses stimulate phonons in the reaction matrix and ensure presence of electrons for electron capture. It may also be possible to use reverse polarity electrolysis pulsed to supply the reaction electrons if the core temperature is high enough to supply the required phonons with out quantum current.

Number of events - 0 - 250 (or free-run)

In the initial reactor prototype the number of events is determinable by user configuration to allow optimization of the reaction characteristics and core start-up. Free run allows the reactor to proceed according to currently configured parameters (pursuant to the implementation of a feedback system).

Event period - 10 $\mu$s - 10,000,000 us (10$\mu$s resolution)

This parameter allows the length of time between event cycles to be controlled. This time period allows for the dissipation of fusion-induced phonon energy. Longer event periods will allow more time between loading pulses and subsequent Quantum Fusion events. Currently due to hardware / software in use, events are being run at 1518.8Hz or 658$\mu$S. This represents a 16-bit PWM with a 99.5328MHz clock.

Number of quantum pulses per event - 0 - 250

This parameter allows optimization of energy production for various loading pulse amplitudes, durations, and temperature profiles. Varying the number of quantum pulses per event, allows the ratio of Quantum Fusion reaction rate and loading rate to be adjusted relative to one another. An analogy would be with multiple injection events per combustion cycle in an internal combustion direct injection engine. The current software / hardware implementing the reaction process is only capable of 140 pulses per event. The current demonstration reactor samples the loading current just after half of the number of pulses in the event have been instigated, in order to obtain the most accurate loading current used for calculation of the next pulse width setting.

### The Loading Pulse

The loading pulse causes dissociation of water into hydrogen and oxygen and promotes the migration of hydrogen nuclei into the reaction crystal matrix. Varying the pulse width relative to the amplitude allows the rate of dissociation to be controlled independent of the rate of loading.

### Loading Pulse Width - 0.1 % - 100% (10ns resolution)

The pulse width determines the length of time loading occurs. This is an indirect control on the density and depth of loading in the reaction matrix. This is roughly analogous to a choke or mixture setting on a carbureted engine. With the materials currently available for demonstration reactors, the process only produces easily detectable excess heat when run at 80+% loading duty cycle. It is expected that efficiency of mass conversion will be much higher under increased pressure and temperature and thereby require the greatly extended range specified above.

### Loading Pulse Amplitude - 0 - 102.375 V (0.025V resolution)

The pulse amplitude determines the rate of dissociation, and thus, the rate of fuel availability. As discussed above, the loading pulse under open container conditions must be in excess of 80% duty cycle. The current demonstration reactor is isolating quantum pulses while the loading is at the same reference as the reactor control processor. The loading energy / current and duty cycle can be controlled by adjusting the loading voltage. The demonstration reactor is using sodium hydroxide and distilled water to provide a lower loading voltage requirement.

### Loading Pulse Offset - 0 - 250,000 ns (25ns resolution)

This offset allows the start of the loading pulse to be varied relative to the start of the quantum pulse(s). This is roughly analogous to the spark timing in an internal combustion engine. This capability is still present in the current demonstration reactor but the reality is that the loading duty cycle in combination with the current quantum pulses being created must be at least 80% to achieve detectable amounts of excess heat. Current device appears to be converting on the order of 0.00014% or less of the H liberated in the electrolysis process. This is still easily detectable as the energy liberated at a loading current of 1.2A is in excess of 10W at that conversion rate.

### The Quantum Pulses

The ultimate purpose of the quantum current is the creation of free, low-energy, high-cross-section neutrons. The quantum pulses are responsible for initiating phonons in the reaction matrix, imparting additional energy to the system, filling available conduction and valance band orbitals to effect quantum compression, and increasing the density of electrons available for electron capture, and consequent low-energy, high-cross-section neutrons.

According to quantum field theory, the potential energy of the Hamiltonian can be expressed in terms of fermion and boson creation and annihilation operators such that a set of processes is defined in which a fermion in a given eigenstate either absorbs or emits a boson (phonon), thereby being pushed into a different eigenstate. The change in eigenstate is the change of an Up quark to a Down quark, which changes a proton to a neutron.

It is believed on the basis of the standard model theory that it is through the creation and absorption of phonons (bosons) that the energy induced as vibrations in the atomic lattice is translated to the nuclear scale, and by which the nuclear energy released by neutron absorption and transmutation is being dispersed as kinetic energy in the lattice. The phonons provide the scale coupling between electromagnetic force-level stimuli in the atomic lattice and the subatomic level increases in momentum.

Quantum current supplies valence or conduction band electrons, providing the ~511KeV electron mass. The quantum current is also responsible for raising the Hamiltonian energy of the reaction sites to the required ~782KeV necessary for electron capture. This value represents the difference in mass between the proton-electron combination and the mass of the neutron.

It is the intersection of these free neutrons with available hydrogen nuclei that comprises the fusion reaction path. The closest academically acceptedreaction paths are the R-process and S-process, which occur in stars.

A relatively low duty cycle of the quantum current pulses is typically required because effective quantum current pulse amplitude for a longer duty cycle would typically vaporize the core. There may be exceptions.

Quantum Pulse Rate - 3 KHz - 300 KHz (10ns resolution) and

Quantum Pulse Amplitude - 0 - 400 V (0.2V resolution)

The individual quantum pulses can be adjusted to tune the phonon creation and energy level. Phonons will also be generated as a product of Quantum Fusion events, leading to a lower phonon stimulation energy input requirement. The energy level requirement is a function of the macro temperature of the core as a whole, the loading rate, the geometry of the core, and the duration of the loading pulse, which partially determines loading depth. As seen in FIG. 3A, the quantum pulse amplitude is defined by voltage source 30 as controlled by signals at control input 55a, while the quantum pulse transitions are controlled by control inputs 55b and 55c. The current demonstration reactor software Pulse Rate range is 19.5KHz to 120.1KHz.

Quantum Pulse Dead Time - 3.3 $\mu$s - 333 $\mu$s (10ns resolution)

This parameter is a function of the circuit used to implement the quantum pulses and the loading rate. The pulse dead time also represents a division between quantum pulses whose direction through the core are alternated. This quantum pulse direction alternation provides for uniform loading of the core. Unidirectional quantum pulsing results in proton migration in the core, leading to a potential gradient in the core and non-uniform heating. It could also result in the eventual destruction of a metallic core as effective quantum pulses cause electro-migration of the atoms in order to generate the required Hamiltonian energy necessary to cause electron capture events / neutron generation. If the electro-migration is unidirectional the core will likely break.

Quantum Pulse Offset - 100 ns - 5000 ns (10ns resolution)

This offset allows the start of the loading pulse to be varied relative to the start of the quantum pulse(s). This is roughly analogous to the spark timing in an internal combustion engine. It also allows the accurate collection of loading current data that is disturbed by the quantum pulses. This parameter has been replaced in the current demonstration reactor by limiting the frequency of quantum pulses although it could represent a delay factor of one pulse to enable the accurate collection of loading current data.

Reactor Feedback

Feedback parameters allow a commercially useful application of the reactor to be constructed with reaction parameters being adjusted in real time according to the dictates of energy demand on the system, changing pressure and temperature inside the reactor vessel.

Temperature and Pressure

This is standard boiler feedback and is used solely for process control.

Loading Pulse Power

Loading pulse power feedback provides information on the water (sodium hydroxide solution in the current demonstration reactor) and inter-electrode environment. A large increase in loading pulse power can be indicative of excess phonon generation leading to a vapor envelope around the core impacting heat transfer away from the core. Operating under a constant loading power method aids in control of this problem. By sampling the loading current at the start of each cycle, the value may be overstated due to the nature of charge storage systems. It is better to collect this data in the middle of the cycle for calculating the loading power of the current cycle and use it to adjust future cycle widths.

Quantum Pulse Power

The quantum pulse power feedback provides information on the state of core loading and possible core damage. The impedance of the core will change dependent upon the percentage of saturation of reactant in the core. Possible core damage will also lead to a persistent increase in quantum current energy due to increased resistance of the core. Impedance rise due to excessive loading density may necessitate a greater number of quantum pulses relative to loading pulses to alleviate the excessive loading condition. Sustained excess loading could lead to core degradation and/or destruction, through chained reactions leading to excess buildup of phonon energy.

Other Reactor Characteristics

Power Supply Voltage (Loading Pulse)

This sets the loading current magnitude (an earlier embodiment used a pulse transformer for loading, and this referred to the voltage on the primary of the pulse transformer). Pulse amplitude determines the rate of dissociation, and thus, the rate of fuel availability. There are upper limits to this function and care should be taken to not cause spallation of the core surface due to excessive instantaneous loading power. In palladium that appears to be ~4A/mm$^2$ although sustained loading of significantly less than this will cause destruction of a palladium core. The above number was found under conditions of loading current RMS values of less than 20mA/mm$^2$.

In an open container the lower end of effective loading appears to be 240mA/mm$^2$ RMS. Care must also be taken in consideration of total electrical heating of the core and how it is mounted in the electrolytic solution. For example, the ends of the core should be insulated to prevent the solution from attacking the support structure, to prevent the support structure from absorbing the loading energy, and to prevent the effective removal of heat from the core material.

Quantum Pulse Transformer Primary Voltage

This voltage allows the quantum current magnitude to be set from the primary side. The primary side is used to maintain isolation between the quantum current and the loading current. Using a center tapped magnetic device to couple the Quantum current energy to the core allows the core to be uniformly loaded. It is important to select a core able to handle the 500MHz and above frequency content of effective quantum compression waveforms.

RF transmission line transformers (TLTs) with a center-tapped secondary work well. In the demonstration reactor T8 of FIG. 3C is using Indiana General Q1 type material Part number F626-12. The transformer is wound with a 4-turn primary and 4-turn center-tapped secondary using 120/38 SPN LITZ. The demonstration reactor uses source switched FETs in a half-bridge configuration (FIG. 3C U4, U5, U5A, U6, U6A) with a Metallized polyester film capacitor C5 to couple energy in to the primary.

Additional Implementations

Another method of using the reaction could include using a porous ceramic structure such as those offered by Foster Miller (see Karandikar1999, Karandikar1999-2). The shape of the porosity as well as the net shape can be specified. This material could be plated with the desired core material. It is believed that the best results using this type material would be achieved with a porosity designed to provide a uniform cross section for a quantum current activation. With this type of core the Quantum Fusion reaction will likely initiate at the points of maximum current density but spread as the temperature rises to the level necessary to supply the remaining phonons required for proton to neutron conversion in the rest of the core. This type of core material could be installed in a sealed container along the lines of those found in radioisotope thermoelectric generator (RTG), but without the dangerously radioactive core.

One aspect of the present disclosure, alluded to in the preceding paragraph, is that a significant portion of the mechanical and thermodynamic infrastructure can be based on existing, commercially available technology. For example, a conventional 3-phase-electrode steam boiler, such as those available from Electric Steam Generator Corporation, 600 S. Oak St. (P.O. Box 21) Buchanan, Michigan 49107 Toll Free: (800) 714-7741, can be retrofitted with a Quantum Fusion core in the following manner: using a 3-phase electrode boiler, use two of the 3-phase electrodes for cathode connection, mounting a Quantum Fusion reactor core between them, allowing quantum current stimulation, and use the third electrode as the anode. Surprisingly, this is the only necessary mechanical modification to the device.

Experimental Results

Experimental Setup

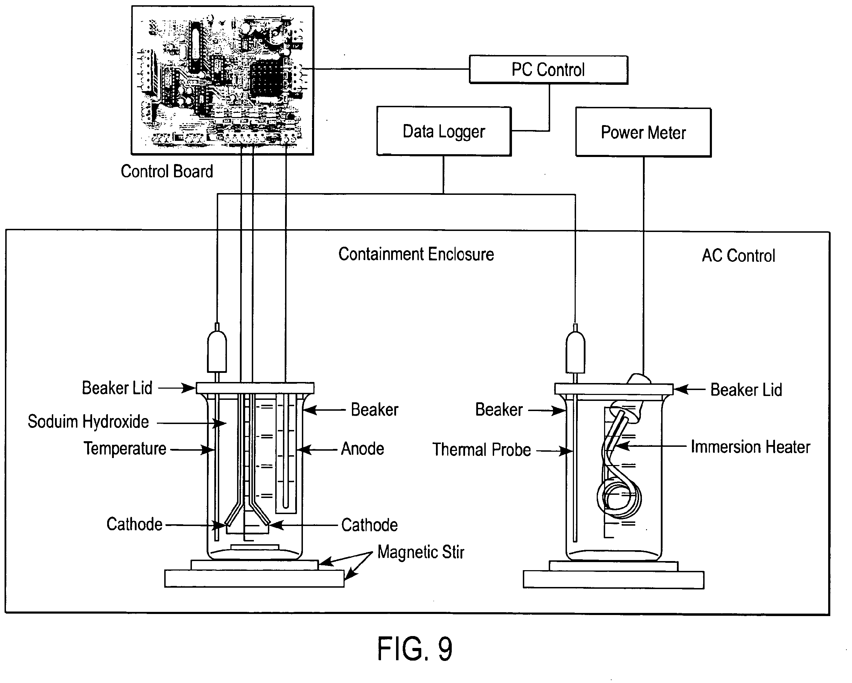

FIG. 9 is a schematic diagram of an experimental apparatus used to verify experimentally the generation of excess energy in the form of heat. In short, a technique for verifying the generation of excess heat uses a dual system with first and second nominally identical mechanical configurations, with each subsystem capable of driving either an active core or a dummy core (joule heater). Both subsystems are maintained within nominally identical environments. The two subsystems have identical beakers containing equal amounts of sodium hydroxide solution.

The first subsystem is provided with the active core and the second subsystem is provided with a joule heater, and the subsystems are activated with the overall input electric power is controlled to be equal for both subsystems, and the temperatures of the two reaction vessels are measured over a period of time.

It is expected that the temperatures in the two reaction vessels will begin to rise, if for no other reason, joule heating of the liquid. Both the active core and the dummy core act as immersion heaters. Due to heat losses arising from conduction and convection, the temperature of the liquid in each vessel ultimately reaches an equilibrium value.

If joule heating were the only mechanism in play, the two vessels would be expected to reach the same equilibrium temperature given that they were being provided the same amount of electrical energy. If the first subsystem reached a higher equilibrium temperature, that could be considered an indication that excess heat beyond that attributable to the electrical energy being converted to heat was being generated.

Experimental Data

Table 1 below shows experimental data acquired during the month of December 2006.

**Table 1**

| Date | Q rising edge in ns | Q peak amplitude in amps | Q width in ns @ 50% amplitude | Q repetition frequency in KHz | Volume of solution in ml | Power in watts to each system | Ambient °C | Reactor °C | Resistance heater °C | Instantaneous loading amps per mm$^2$ | RMS loading amps per mm$^2$ | Difference °C to resistance heater |
|---|---|---|---|---|---|---|---|---|---|---|---|---|
| 12/05/06 | 97.7 | 5.6 | 294 | 201.1 | 200 | 17 | 21 | 40 | 41 | 0.247 | 0.163 | -1 |
| 12/05/06 | 0 | 0 | 0 | 0 | 200 | 18 | 20 | 62 | 67 | 0.344 | 0.283 | -5 |
| 12/18/06 | 22.4 | 8.7 | 160 | 90.5 | 200 | 22 | 23 | 79 | 73 | 0.262 | 0.249 | 6 |
| 12/20/06 | 37 | 11.5 | 166 | 90.6 | 200 | 18 | 23 | 80 | 68 | 0.208 | 0.192 | 12 |

The first three columns (excluding the date column) describe the quality of the quantum compression (abbreviated as "Q" in the table) waveforms. For the runs shown in the chart, the core was 0.05mm diameter palladium wire. The core diameter is important in the determination of sizing and edge speed requirements for the quantum compression pulses. Instantaneous loading amps/mm$^2$ and RMS loading amps/mm$^2$ are the loading requirements and total amps are related to the surface area of the core in use.

The power to the reactor and the joule heater were maintained at equal levels for comparison. Measuring the joule heater power was effected by using a standard power meter. Measuring the reactor power was done computationally, with separate computations for the loading power and the quantum compression power. In general, the bulk (75-90%) of the power to the reactor is the power of the loading portion of the circuit, with a smaller fraction for the quantum compression.

The second December 5 run had no quantum pulses applied to the core, and the joule heater raised the water to a higher temperature. This reflects the fact that the joule heater transfers more of the input electrical power to the solution than does the loading circuit. The results of the December 18 and December 20 runs, which had sharper pulses than the first December 5 run, are encouraging in that they strongly suggest the generation of excess heat due to the quantum compression pulses.

References

The following references are hereby incorporated by reference:

| Baym1971 | G. Baym, H. A. Bethe, C. J. Pethick, "Neutron star matter," Nucl. Phys. A 175, 225 (1971) (North-Holland Publishing Co., Amsterdam). (47 pages) |
|---|---|
| Cravens2003 | D.J. Cravens and D.G. Letts, "Practical Techniques in CF Research - Triggering Methods," Tenth International Conference on Cold Fusion, 2003. Cambridge, MA: LENR-CANR.org. The paper bears the following legend: "This paper was presented at the 10th International Conference on Cold Fusion. It may be different from the version published by World Scientific, Inc (2003) in the official Proceedings of the conference." (9 pages) |
| Davis2001 | U.S. Patent No. 6,248,221 issued June 19, 2001 to Davis et al. for "Electrolysis apparatus and electrodes and electrode material therefor." |
| George 1997 | Production of alpha particles and excess heat at Los Alamos National Laboratory |
| George1999 | Russ George, "Production of 4He from deuterium during contact with nano-particle palladium on carbon at 200° C and 3 atmosphere deuterium pressure," Paper presented at the American Physical Society Centennial Conference March 26th, 1999.<br>currently available electronically at:<br>http://www.d2fusion.com/education/catalyst_helium1.html. (6 pages) |
| George-2 | http://d2fusion.com/education/sonofusion.html |
| Karandikar1999 | "Single-Crystal YAG Reinforcement Preforms for Refractory Composites" Work done by Prashant G. Karandikar, Ronald Roy, and Uday Kashalikar of Foster-Miller, Inc. for John H. Glenn Research Center<br>currently available electronically at:<br>http://www.nasatech.com/Briefs/May99/LEW16665.html. (2 pages) |
| Karandikar1999-2 | "Microporous, Single Crystal Oxide Materials" Prashant G. Karandikar. (6 pages) |
| Kolawa2004 | U.S. Patent No. 6,753,469 issued June 22, 2004 to Kolawa et al. for "Very high efficiency, miniaturized, long-lived alpha particle power source using diamond devices for extreme space environments." |
| NIH_Guide | The NIH Guide to Molecular Modeling: "Molecular Mechanics" currently available electronically at: |
|  | http://cmm.info.nih.gov/modeling/guide_documents/molecular_mech anics_ document.html#nonbond_anchor. (9 pages) |

Conclusion

While the above is a complete description of specific embodiments of the invention, the above description should not be taken as limiting the scope of the invention as defined by the claims.

**Claims**

1.  An apparatus for energy generation comprising:

   a body (15), referred to as the core, of a material capable of phonon propagation;
   a mechanism (20) for introducing reactants into said core; and
   a mechanism (30) for inducing phonons in said core so that reactants, when introduced into said core, undergo nuclear reactions;

   said core comprises a lattice type material; and
   said mechanism for inducing phonons in said core comprises a source of current pulses for establishing current pulses through said core; the apparatus being **characterised in that** it further comprises

a control system (40), coupled to said mechanism for introducing reactants and to said mechanism for inducing phonons, configured to control the rate of introduction of the reactants into said core and the amplitude, width, frequency, and direction of the current pulses produced by the source of current pulses and thereby control the number of nuclear reactions and the depth of the nuclear reactions in said core so as to provide a desired level of energy generation while allowing energy released due to the nuclear reactions to dissipate in a manner that substantially avoids destruction of said core.

2. The apparatus of claim 1 wherein said mechanism for introducing reactants into said core comprises a controlled electrolysis source, electrically coupled to said core.

3. The apparatus of claim 1 further comprising a liquid medium from which the reactants are provided which liquid medium also is configured to act as a heat transfer medium (45) to remove heat from said core.

4. The apparatus of claim 1 further comprising: a gaseous medium from which the reactants are provided; and a thermally conductive mass of material thermally coupled to said core for transferring heat away from said core.

5. The apparatus of claim 1 wherein:

the apparatus further comprises a thermally conductive mass of material;
said core comprises core material disposed on a first surface of a thermally conductive mass of solid material; and
said thermally conductive mass of material provides a mechanism (45) for transferring heat away from said core.

6. The apparatus of claim 5 further comprising a working fluid, wherein said thermally conductive mass of material has a second surface portion in contact with the working fluid.

7. The apparatus of claim 1 wherein said mechanism for inducing phonons in the core comprises a sonic or ultrasonic actuator.

8. The apparatus of claim 1 wherein said control system is configured to control the source of current pulses to produce current pulses in alternating directions.

9. The apparatus of claim 1 wherein said core is formed as a wire or a sheet.

10. The apparatus of claim 1 wherein said core is formed as a fluidized or powder bed.

11. The apparatus of claim 1 wherein said mechanism for controlling the introduction of reactants into the core comprises an electric field generator.

12. A method for energy generation comprising:

providing a body (15), referred to as the core, of a material capable of phonon propagation;
introducing reactants into the core; and
inducing phonons in the core to provide energy for said reactants to undergo nuclear reaction;
the core comprises a lattice type material;
inducing phonons in the core comprises passing current pulses through the core, the current pulses being controllable; the method being **characterised by** the step of
controlling the rate of reactant introduction and amplitude, width, frequency, and direction of the current pulses produced by the source of current pulses so as to control the number of nuclear reactions and the depth of the nuclear reactions in the core so as to provide a desired level of energy generation while allowing energy released due to the nuclear reactions to dissipate in a manner that substantially avoids destruction of the core.

13. The method of claim 12 wherein introducing reactants into the core uses a controlled electrolysis source (20), electrically coupled to said core.

14. The method of claim 12 wherein reactants are provided from a liquid medium, which liquid medium also acts as a heat transfer medium (45) to remove heat from the core.

15. The method of claim 12 wherein inducing phonons in the core comprises applying sonic or ultrasonic energy to the core.

16. The method of claim 12 wherein inducing phonons in the core comprises producing current pulses in alternating directions.

**Patentansprüche**

1. Vorrichtung zur Energieerzeugung, die Folgendes umfasst:

   einen Körper (15), der als der Kern bezeichnet wird, eines zur Phononenausbreitung fähigen Materials;
   einen Mechanismus (20) zum Einbringen von Reaktanten in den Kern; und
   einen Mechanismus (30) zum Induzieren von Phononen in dem Kern, sodass Reaktanten, wenn sie in den Kern eingebracht werden, Atomreaktionen eingehen;
   wobei der Kern ein gitterartiges Material umfasst; und
   der Mechanismus zum Induzieren von Phononen in dem Kern eine Quelle von Stromimpulsen zum Erzeugen von Stromimpulsen durch den Kern umfasst;
   wobei die Vorrichtung **dadurch gekennzeichnet ist, dass** sie weiter Folgendes umfasst:
   ein Steuersystem (40), das an den Mechanismus zum Einbringen von Reaktanten und an den Mechanismus zum Induzieren von Phononen gekoppelt ist und dazu konfiguriert ist, die Geschwindigkeit der Einbringung der Reaktanten in den Kern und die Amplitude, Breite, Frequenz und Richtung der von der Quelle von Stromimpulsen produzierten Stromimpulse zu steuern und dadurch die Zahl der Atomreaktionen und die Tiefe der Atomreaktionen in dem Kern zu steuern, um ein gewünschtes Niveau der Energieerzeugung bereitzustellen, während infolge der Atomreaktionen freigesetzter Energie ermöglicht wird, auf eine Weise abgebaut zu werden, die die Zerstörung des Kerns im Wesentlichen vermeidet.

2. Vorrichtung nach Anspruch 1, wobei der Mechanismus zum Einbringen von Reaktanten in den Kern eine geregelte Elektrolysequelle umfasst, die elektrisch an den Kern gekoppelt ist.

3. Vorrichtung nach Anspruch 1, weiter umfassend ein flüssiges Medium, aus dem die Reaktanten bereitgestellt werden, wobei das flüssige Medium außerdem dazu konfiguriert ist, als Wärmeübertragungsmedium (45) zum Entfernen von Wärme von dem Kern zu wirken.

4. Vorrichtung nach Anspruch 1, die weiter Folgendes umfasst: ein gasförmiges Medium, aus dem die Reaktanten bereitstellt werden; und
   eine wärmeleitfähige Masse von Material, die thermisch an den Kern gekoppelt ist, um Wärme von dem Kern abzuführen.

5. Vorrichtung nach Anspruch 1, wobei:

   die Vorrichtung weiter eine wärmeleitfähige Masse von Material umfasst;
   der Kern Kernmaterial umfasst, das auf einer ersten Oberfläche einer wärmeleitfähigen Masse von festem Material angeordnet ist; und
   die wärmeleitfähige Masse von Material einen Mechanismus (45) zum Abführen von Wärme von dem Kern bereitstellt.

6. Vorrichtung nach Anspruch 5, weiter umfassend ein Arbeitsfluid, wobei die wärmeleitfähige Masse von Material einen zweiten Oberflächenabschnitt im Kontakt mit dem Arbeitsfluid aufweist.

7. Vorrichtung nach Anspruch 1, wobei der Mechanismus zum Induzieren von Phononen in dem Kern einen Schall- oder Ultraschallaktor umfasst.

8. Vorrichtung nach Anspruch 1, wobei das Steuersystem dazu konfiguriert ist, die Quelle von Stromimpulsen zu steuern, um Stromimpulse in abwechselnden Richtungen zu produzieren.

9. Vorrichtung nach Anspruch 1, wobei der Kern als Draht oder Flachmaterial gebildet ist.

10. Vorrichtung nach Anspruch 1, wobei der Kern als Fließ- oder Pulverbett gebildet ist.

**11.** Vorrichtung nach Anspruch 1, wobei der Mechanismus zum Steuern des Einbringens von Reaktanten in den Kern einen Erzeuger eines elektrischen Felds umfasst.

**12.** Verfahren zur Energieerzeugung, die Folgendes umfasst:

Bereitstellen eines Körpers (15), der als der Kern bezeichnet wird, eines zur Phononenausbreitung fähigen Materials;
Einbringen von Reaktanten in den Kern; und
Induzieren von Phononen in dem Kern, um Energie für die Reaktanten zum Eingehen einer Atomreaktion bereitzustellen;
wobei der Kern ein gitterartiges Material umfasst;
wobei das Induzieren von Phononen in dem Kern das Leiten von Stromimpulsen durch den Kern umfasst, wobei die Stromimpulse steuerbar sind;
wobei das Verfahren durch folgenden Schritt gekennzeichnet ist:
Steuern der Geschwindigkeit des Einbringens der Reaktanten und der Amplitude, Breite, Frequenz und Richtung der von der Quelle von Stromimpulsen produzierten Stromimpulse, um die Zahl von Atomreaktionen und die Tiefe der Atomreaktionen in dem Kern zu steuern, um ein gewünschtes Niveau der Energieerzeugung bereitzustellen, während infolge der Atomreaktionen freigesetzter Energie ermöglicht wird, auf eine Weise abgebaut zu werden, die die Zerstörung des Kerns im Wesentlichen vermeidet.

**13.** Verfahren nach Anspruch 12, wobei das Einbringen von Reaktanten in den Kern eine geregelte Elektrolysequelle (20) umfasst, die elektrisch an den Kern gekoppelt ist.

**14.** Verfahren nach Anspruch 12, wobei Reaktanten aus einem flüssigen Medium bereitgestellt werden, wobei das flüssige Medium außerdem als Wärmeübertragungsmedium (45) wirkt, um Wärme von dem Kern abzuführen.

**15.** Verfahren nach Anspruch 12, wobei das Induzieren von Phononen in dem Kern das Anlegen von Schall- oder Ultraschallenergie an den Kern umfasst.

**16.** Verfahren nach Anspruch 12, wobei das Induzieren von Phononen in dem Kern das Produzieren von Stromimpulsen in abwechselnden Richtungen umfasst.

**Revendications**

**1.** Appareil de génération d'énergie comportant:

un corps (15) c'est-à-dire un noyau de matériau capable d'assurer la propagation des phonons;
un mécanisme (20) d'introduction des réactifs dans le noyau; et
un mécanisme (30) d'induction des phonons dans le noyau de sorte que les réactifs, dès leur introduction dans le noyau, subissent des réactions nucléaires;

le noyau en question comportant un matériau en réseau; et
le mécanisme d'induction des phonons dans le noyau comportant une source d'impulsions de courant servant à établir les impulsions de courant dans le noyau; l'appareil étant **caractérisé en ce qu'**il comprend par ailleurs

un système de commande (40) relié à ce mécanisme et servant à introduire les réactifs dans le mécanisme d'induction des phonons, et configuré de manière à contrôler le taux d'introduction des réactifs dans le noyau ainsi que l'amplitude, la largeur, la fréquence et le sens des impulsions de courant produites par la source des impulsions de courant, et par conséquent contrôler le nombre de réactions nucléaires et la profondeur des réactions nucléaires dans le noyau, afin de fournir le niveau requis de génération d'énergie tout en permettant la dissipation de l'énergie dégagée à la suite des réactions nucléaires, cela d'une manière qui évite essentiellement la destruction du noyau.

**2.** Appareil selon la revendication 1, **caractérisé en ce que** le mécanisme d'introduction des réactifs dans le noyau comporte une source d'électrolyse contrôlée connectée électriquement au noyau.

**3.** Appareil selon la revendication 1, comportant par ailleurs un milieu liquide à partir duquel sont prévus les réactifs, ce milieu liquide étant d'autre part configuré en tant que milieu de transfert thermique (45) de manière à ôter la chaleur du noyau.

**4.** Appareil selon la revendication 1, comportant par ailleurs un milieu gazeux à partir duquel sont prévus les réactifs, et une masse thermiquement conductrice de matériau qui est thermiquement couplée au noyau et qui sert à transférer la chaleur à partir du noyau.

**5.** Appareil selon la revendication 1, **caractérisé en ce que**:

l'appareil par ailleurs une masse thermiquement conductrice de matériau;
le noyau comprend un matériau de noyau disposé sur une première surface d'une masse thermiquement conductrice de matériau solide; et
la masse thermiquement conductrice de matériau sert de mécanisme (45) de transfert la chaleur à partir du noyau solide.

**6.** Appareil selon la revendication 5, comportant par ailleurs un fluide de travail **caractérisé en ce que** la masse thermiquement conductrice de matériau comporte une deuxième surface qui est en contact avec le fluide de travail.

**7.** Appareil selon la revendication 1, **caractérisé en ce que** le mécanisme qui sert à induire les phonons dans le noyau comprend un organe de commande sonique ou aux ultrasons.

**8.** Appareil selon la revendication 1, **caractérisé en ce que** le système de commande est configuré de manière à commander la source d'impulsions de courant afin de produire des impulsions de courant dans des sens alternatifs.

**9.** Appareil selon la revendication 1, **caractérisé en ce que** le noyau prend la forme d'un fil ou d'une feuille.

**10.** Appareil selon la revendication 1, **caractérisé en ce que** le noyau a la forme d'un lit fluidisé ou de poudre.

**11.** Appareil selon la revendication 1, **caractérisé en ce que** le mécanisme d'introduction des réactifs dans le noyau comporte un générateur de champ électrique.

**12.** Procédé de génération d'énergie qui consiste:

à prévoir un corps (15) c'est-à-dire un noyau de matériau capable d'assurer la propagation des phonons;
à introduire des réactifs dans le noyau; et
à induire des phonons dans le noyau afin de fournir, aux réactifs, l'énergie nécessaire pour subir la réaction nucléaire;
le noyau comporte un matériau en réseau;
l'induction des phonons dans le noyau consiste entre autres à envoyer des impulsions de courant à travers le noyau, les impulsions de courant étant contrôlables; le procédé étant **caractérisé en ce que** l'étape qui consiste à contrôler le taux d'introduction des réactifs dans le noyau ainsi que l'amplitude, la largeur, la fréquence et le sens des impulsions de courant produites par la source des impulsions de courant, de manière à contrôler le nombre de réactions nucléaires et la profondeur des réactions nucléaires dans le noyau, afin de fournir le niveau requis de génération d'énergie tout en permettant la dissipation de l'énergie dégagée à la suite des réactions nucléaires, cela d'une manière qui évite essentiellement la destruction du noyau.

**13.** Procédé selon la revendication 12, **caractérisé en ce que** l'introduction des réactifs dans le noyau emploie une source d'électrolyse contrôlée (20) connectée électriquement au noyau.

**14.** Procédé selon la revendication 12, **caractérisé en ce que** les réactifs sont prévus à partir d'un milieu liquide, ce milieu liquide faisant également fonction de milieu de transfert thermique (45) de manière à ôter la chaleur du noyau.

**15.** Procédé selon la revendication 12, **caractérisé en ce que** l'introduction des phonons dans le noyau consiste entre autres à appliquer de l'énergie sonique ou aux ultrasons au noyau.

**16.** Procédé selon la revendication 12, **caractérisé en ce que** l'introduction des phonons dans le noyau consiste entre autres à produire des impulsions de courant dans des sens alternatifs.

FIG. 1

FIG. 2

Analog Feedback of
Power Supply
Voltage 0-400

55d ←

Digital Output
Controls
Quantum
Pulse A
On/Off

55b ⟩

Voltage
Source
Power
Supply

30

+

−

Output Controls
Amplitude of
Quantum Pulse

55a ⟩

Output from
Control System
Controls Loading
Pulse Amplitude

⟨ 50b

Current
Source

Power
Feedback

⟩ 50c

20

15

25

⟨ 50a

Digital Output
Controls Loading
Pulse On/Off

Digital Output
Controls Quantum
Pulse B On/Off

55c ⟩

⟩ 60c

Feedback from
Temperature
Sensor

FIG. 3A

FIG. 3B

Control to Set Power
Level of Quantum Compression

Monitor Quantum
Compression Current
55d
P9    P10
R2

J4-2
55a
J4-1

+ C2
PGND

Monitor
Reactant
Loading
Current
P8    P7

+15V

C3

GND

F626-12

R3
50C

Cathode

F04
75

U5
IRFP350

U5A
STD17NF03L

C5

Monitor
Quantum
Compression
Voltage
P11    P12

T8

6
5
X1-3
GND

D2
1N4004

U4
IR2184DIP

5  VDD   VB  8

55A/D

HO  7
VS  6

1  IN
4  ON/OFF  2  /SD
3  COM   LO  4

3
X1-2
GND

C4

R6

+15V

U6
IRFP350

U6A
STD17NF03L

R5

FBEED1

PGND

J1-1

Connection Point for Core

J1-2

GND

FIG. 3C

FIG. 4

FIG. 5

FIG. 6

FIG. 7

FIG. 8

FIG. 9

EP 1 971 985 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 75502405 P
- EP 0645777 A1
- FR 2708779 A1
- WO 03066516 A2
- WO 9013129 A2
- EP 1551032 A1
- WO 2004044923 A2
- US 6753469 B
- US 6248221 B, Davis

**Non-patent literature cited in the description**

- Theoretical Dynamical Studies of Metal Clusters and Cluster-Ligand Systems. **J. JELLINEK.** Metal-Ligand Interactions: Structure and Reactivity. Kluwer, 1995
- Neutron star matter. **G. BAYM ; H. A. BETHE ; C. J. PETHICK.** Nucl. Phys. A. North-Holland Publishing Co, 1971, vol. 175, 225
- **D.J. CRAVENS ; D.G. LETTS.** Practical Techniques in CF Research - Triggering Methods. *Tenth International Conference on Cold Fusion,* 2003
- the 10th International Conference on Cold Fusion. Proceedings of the conference. World Scientific, Inc, 2003, 9
- **RUSS GEORGE.** Production of He from deuterium during contact with nano-particle palladium on carbon at 200° C and 3 atmosphere deuterium pressure. *American Physical Society Centennial Conference,* 26 March 1999, 6, http://www.d2fusion.com/education/catalyst_helium1.html
- **PRASHANT G. KARANDIKAR ; RONALD ROY ; UDAY KASHALIKAR.** Single-Crystal YAG Reinforcement Preforms for Refractory Composites. Foster-Miller, Inc. for John H. Glenn Research Center, 2
- **PRASHANT G. KARANDIKAR.** *Microporous, Single Crystal Oxide Materials,* 6
- The NIH Guide to Molecular Modeling. *Molecular Mechanics,* 9, http://cmm.info.nih.gov/modeling/guide_documents/molecular_mech anics_document.html#nonbond_anchor